# EUROPEAN PATENT APPLICATION

(11) **EP 1 867 652 A1**
(43) Date of publication of application: **19.12.2007**
(21) Application number: 07011805.4
(22) Date of filing: 15.06.2007
(51) Int. Cl.: C07F 7/18

(54) **Organosilicon compound**

(30) Priority: 16.06.2006 JP 2006167892
(71) Applicant: Shin-Etsu Chemical Co., Ltd., Tokyo 100-0005 (JP)
(72) Inventor: Matsumoto, Nobuaki, Annaka-shi Gunma-ken (JP); Miyoshi, Kei, Annaka-shi Gunma-ken (JP); Yamada, Kunihiro, Annaka-shi Gunma-ken (JP); Ozai, Toshiyuki, Annaka-shi Gunma-ken (JP)
(74) Representative: Wolff, Felix

(57) **Abstract**

Provided is a novel organosilicon compound which functions as a silane coupling agent (wetter) that enables a silicone to be filled with a large quantity of a filler.

The organosilicon compound is represented by a general formula (1) 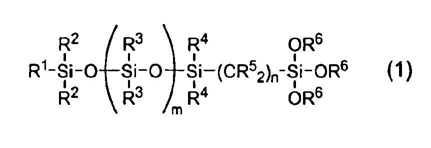 wherein, R¹ represents a hydrogen atom, or an unsubstituted or substituted monovalent hydrocarbon group, R² to R⁴ represent identical or different unsubstituted or substituted monovalent hydrocarbon groups, each R⁵ represents, independently, a hydrogen atom, or an unsubstituted or substituted monovalent hydrocarbon group, each R⁶ represents, independently, an identical or different unsubstituted or substituted monovalent organic group, m represents an integer from 0 to 4, and n represents an integer from 2 to 20; as well as a method of producing the above organosilicon compound, wherein a one end organohydrogensilyl-terminated organopolysiloxane is produced by reacting an organohydrogensiloxane with a vinylsilane or an alkenyltriorganooxysilane in the presence of a hydrosilylation catalyst, and optionally this one end organohydrogensilyl-terminated organopolysiloxane is then reacted with an alkene in the presence of a hydrosilylation catalyst.

## Description

### BACKGROUND OF THE INVENTION

### 1. Field of the Invention

The present invention relates to a novel organosilicon compound which functions as a silane coupling agent (wetter) that enables a silicone to be filled with a large quantity of a filler.

### 2. Description of the Prior Art

Many electronic components generate heat during use, and in order to ensure that those electronic components function satisfactorily, heat must be removed away from the electronic components. Particularly in the case of integrated circuit elements such as the CPUs used in personal computers, increases in the operating frequency have lead to increased heat generation, and dealing with this heat has become a significant problem.

Many methods have been proposed for removing this heat. Particularly in the case of electronic components that generate a large quantity of heat, methods have been proposed in which the heat is dissipated by placing a thermal conductive material such as a thermal conductive grease or thermal conductive sheet between the electronic component and another member such as a heat sink (see patent reference 1 and patent reference 2).

Known examples of this type of thermal conductive material include heat-radiating greases that comprise a zinc oxide or alumina powder blended into a silicone oil base (see patent reference 3 and patent reference 4).

Moreover, in order to improve the thermal conductivity, many thermal conductive materials comprising aluminum nitride powder have been proposed. The above patent reference 1 discloses a thixotropic thermal conductive material comprising a liquid organosilicone carrier, silica fiber, and at least one material selected from dendritic zinc oxide, lamellar aluminum nitride and lamellar boron nitride. Patent reference 5 discloses a silicone grease composition obtained by blending a spherical hexagonal aluminum nitride powder with a specified particle size range into a specific organopolysiloxane. Patent reference 6 discloses a thermal conductive silicone grease composition that uses a combination of a fine aluminum nitride powder with a small particle size and a coarse aluminum nitride powder with a large particle size. Patent reference 7 discloses a thermal conductive silicone grease composition that uses a combination of an aluminum nitride powder and a zinc oxide powder. Patent reference 8 discloses a thermal conductive grease composition that uses an aluminum nitride powder that has been surface-treated with an organosilane.

Aluminum nitride has a thermal conductivity of 70 to 270 W/(m·K), whereas diamond has an even higher thermal conductivity of 900 to 2,000 W/(m·K). Patent reference 9 discloses a thermal conductive silicone composition that comprises a silicone resin, diamond, zinc oxide, and a dispersant.

Furthermore, metals also have a high thermal conductivity, and can be used in those situations where insulation of the electronic component is unnecessary. Patent reference 10 discloses a thermal conductive grease composition obtained by mixing metallic aluminum powder with a base oil such as a silicone oil.

However, none of these thermal conductive materials or thermal conductive grease compositions is able to satisfactorily cope with the quantity of heat generated by modem integrated circuit elements such as CPUs.

It is known from the theoretical equation of Maxwell and Bruggeman that the thermal conductivity of a material obtained by blending a thermal conductive filler into a silicone oil is substantially independent of the thermal conductivity of the thermal conductive filler if the volume fraction of the thermal conductive filler is 0.6 or less. The thermal conductivity of the material only starts to be affected by the thermal conductivity of the thermal conductive filler once the volume fraction of the filler exceeds 0.6. In other words, in order to raise the thermal conductivity of a thermal conductive grease composition, the first important factor is to determine how to enable the composition to be filled with a large quantity of thermal conductive filler. If such high-quantity filling is possible, then the next important factor is to determine how to enable the use of a filler with a high thermal conductivity. However, simply increasing the filling quantity can cause a variety of problems, including a marked reduction in the fluidity of the thermal conductive grease composition, a deterioration in the workability of the grease, including the coating characteristics (such as the dispensing and screen printing characteristics), and an inability of the composition to fill minor indentations within the surface of the electronic component and/or heat sink. In order to resolve these problems, a method has been proposed in which the thermal conductive filler is surface-treated with a silane coupling agent (a wetter) and then dispersed within the silicone that functions as the base polymer, thereby enabling the fluidity of the thermal conductive grease composition to be maintained.

Examples of wetters that are commonly used include alkoxysilanes (patent reference 11 and patent reference 12). Use of these wetters offers the advantage that the initial viscosity of the thermal conductive grease composition can be reduced to an extremely low level. However, because these wetter components gradually volatilize, continued application of heat to the thermal conductive grease composition causes the composition to thicken over time, making it impossible to maintain fluidity Accordingly, in those cases where long term reliability is particularly important, an alkoxy group-containing organopolysiloxane that is resistant to volatilization is used (patent reference 13 and patent reference 14). However, alkoxy group-containing organopolysiloxanes exhibit significantly inferior wetting properties to an equal volume of an alkoxysilane, meaning that thermal conductive grease compositions that use an alkoxy group-containing organopolysiloxane as the wetter can not be filled with a large quantity of a thermal conductive filler. In other words, in order to produce a thermal conductive grease composition with a similar fluidity to that obtained when an alkoxysilane is used, a much larger quantity of the alkoxy group-containing organopolysiloxane is required. The fact that a large quantity of the alkoxy group-containing organopolysiloxane is required in order to fill a certain quantity of a base polymer with a thermal conductive filler means that the fill factor for the thermal conductive filler must be reduced by a corresponding amount. In other words, currently, the performance of the composition must be sacrificed for the sake of reliability. Accordingly, the development of a wetter which causes no loss in the fluidity of the thermal conductive silicone grease composition over time, even if the composition is subjected to continuous heating, which enables the initial viscosity of the composition to be reduced by addition of only a small quantity of the wetter, and which enables the composition to be filled with a large quantity of a thermal conductive filler has been keenly sought.
[Patent Reference 1]
EP 0024498 A1
[Patent Reference 2]
Japanese Laid-open publication (kokai) No. Sho 61-157587
[Patent Reference 3]
Japanese Post-Examination Patent publication (kokoku) No. Sho 52-33272
[Patent Reference 4]
GB 1480931 A
[Patent Reference 5]
Japanese Laid-open publication (kokai) No. Hei 2-153995
[Patent Reference 6]
EP 0382188 A1
[Patent Reference 7]
USP 5,981,641
[Patent Reference 8]
USP 6,136,758
[Patent Reference 9]
Japanese Laid-open publication (kokai) No. 2002-30217
[Patent Reference 10]
US 2002/0018885 A1
[Patent Reference 11]
Japanese Patent Publication No. 3,290,127
[Patent Reference 12]
Japanese Patent Publication No. 3,372,487
[Patent Reference 13]
US 2006/0135687 A1
[Patent Reference 14]
Japanese Laid-open publication (kokai) No. 2005-162975

### SUMMARY OF THE INVENTION

An object of the present invention is to provide a novel organosilicon compound which functions as a silane coupling agent (wetter) that enables a silicone to be filled with a large quantity of a filler.

In order to achieve the above object, the present invention provides an organosilicon compound represented by a general formula (1)

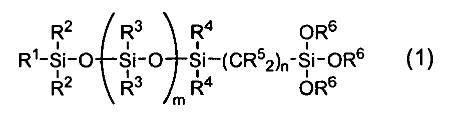

wherein, R¹ represents a hydrogen atom, or an unsubstituted or substituted monovalent hydrocarbon group, R² to R⁴ represent identical or different unsubstituted or substituted monovalent hydrocarbon groups, each R⁵ represents, independently, a hydrogen atom, or an unsubstituted or substituted monovalent hydrocarbon group, each R⁶ represents, independently, an identical or different unsubstituted or substituted monovalent organic group, m represents an integer from 0 to 4, and n represents an integer from 2 to 20].

The organosilicon compound of the present invention functions as a silane coupling agent (wetter) that exhibits improved wetting of the filler relative to silicones. Accordingly, even if a silicone composition comprising the organosilicon compound of the present invention also comprises a filler, any increases in viscosity can be suppressed, enabling favorable fluidity to be maintained. As a result, a silicone composition comprising the organosilicon compound of the present invention can be filled with a large quantity of filler. Furthermore, the fluidity of the composition is maintained even following heating of the composition at a high temperature for an extended period. Accordingly, if a silicone composition comprising the organosilicon compound of the present invention is filled with a large quantity of a thermal conductive inorganic filler, then a thermal conductive silicone composition is obtained that exhibits excellent thermal conductivity and is capable of maintaining favorable fluidity over an extended period even at a high temperature.

### DETAILED DESCRIPTION OF THE PREFERRED EMBODIMENTS

A more detailed description of the present invention is presented below. In this description, quantities expressed using the units "parts by volume", viscosity values, and kinematic viscosity values all refer to values measured at 25°C. Furthermore, "Me" represents a methyl group.

In the above general formula (1), R¹ represents a hydrogen atom, or an unsubstituted or substituted monovalent hydrocarbon group that preferably contains from 6 to 30 carbon atoms, and more preferably from 8 to 20, and even more preferably from 10 to 18, carbon atoms. In those cases where R¹ is a monovalent hydrocarbon group, provided the number of carbon atoms of R¹ is within the above range, the effect of the organosilicon compound in improving the wetting of the filler relative to silicones manifests readily, and handling is favorable because the organosilicon compound is resistant to solidification even at low temperatures (for example, -40°C to -20°C). In those cases where R¹ is a monovalent hydrocarbon group, specific examples of suitable groups include alkyl groups such as a hexyl group, heptyl group, octyl group, nonyl group, decyl group, dodecyl group, tetradecyl group, hexadecyl group, octadecyl group or eicosyl group; cycloalkyl groups such as a cyclohexyl group; alkenyl groups such as a hexenyl group, heptenyl group, octenyl group, nonenyl group, decenyl group, dodecenyl group or tetradecenyl group; aryl groups such as a phenyl group, tolyl group, xylyl group or naphthyl group; aralkyl groups such as a benzyl group, 2-phenylethyl group or 2-methyl-2-phenylethyl group; and groups in which a portion of, or all of, the hydrogen atoms bonded to carbon atoms in the above hydrocarbon groups have been substituted with halogen atoms or the like such as fluorine, bromine or chlorine atoms, such as a 2-(nonafluorobutyl)ethyl group, 2-(heptadecafluorooctyl)ethyl group or p-chlorophenyl group.

In the above general formula (1), the R² groups represent identical or different unsubstituted or substituted monovalent hydrocarbon groups that preferably contain from 1 to 8 carbon atoms, and more preferably from 1 to 5, and even more preferably from 1 to 3, carbon atoms. Specific examples of R² include alkyl groups such as a methyl group, ethyl group, propyl group, isopropyl group, butyl group, t-butyl group, pentyl group, hexyl group or octyl group; cycloalkyl groups such as a cyclopentyl group or cyclohexyl group; alkenyl groups such as a vinyl group, allyl group or butenyl group; aryl groups such as a phenyl group, tolyl group or xylyl group; and groups in which a portion of, or all of, the hydrogen atoms bonded to carbon atoms in the above hydrocarbon groups have been substituted with halogen atoms or the like such as fluorine, bromine or chlorine atoms, such as a chloromethyl group, bromoethyl group, 3,3,3-trifluoropropyl group, 2-(nonafluorobutyl)ethyl group or p-chlorophenyl group. Of these possibilities, from the viewpoints of ease of synthesis of the organosilicon compound of the present invention and economic viability, a methyl group or ethyl group is preferred.

In the above general formula (1), R³ and R⁴ represent identical or different unsubstituted or substituted, saturated or unsaturated, monovalent hydrocarbon groups that preferably contain from 1 to 8 carbon atoms, and more preferably from 1 to 5, and even more preferably from 1 to 3, carbon atoms. Specific examples of R³ and R⁴ include alkyl groups such as a methyl group, ethyl group, propyl group, isopropyl group, butyl group, t-butyl group, pentyl group, hexyl group or octyl group; cycloalkyl groups such as a cyclopentyl group or cyclohexyl group; alkenyl groups such as a vinyl group, allyl group or butenyl group; aryl groups such as a phenyl group, tolyl group or xylyl group; aralkyl groups such as a benzyl group or 2-phenylethyl group; and groups in which a portion of, or all of, the hydrogen atoms bonded to carbon atoms in the above hydrocarbon groups have been substituted with halogen atoms or the like such as fluorine, bromine or chlorine atoms, including halogenated monovalent hydrocarbon groups such as a chloromethyl group, bromoethyl group, 3,3,3-trifluoropropyl group, 2-(nonafluorobutyl)ethyl group or p-chlorophenyl group. Of these possibilities, from the viewpoints of ease of synthesis of the organosilicon compound of the present invention and economic viability, a methyl group or ethyl group is preferred.

In the above general formula (1), each R⁵ group represents, independently, a hydrogen atom, or an unsubstituted or substituted monovalent hydrocarbon group that preferably contains from 1 to 5 carbon atoms, and more preferably from 1 to 3, and even more preferably from 1 to 2, carbon atoms. In those cases where R⁵ is a monovalent hydrocarbon group, specific examples of suitable groups include alkyl groups such as a methyl group, ethyl group, propyl group, isopropyl group, butyl group, t-butyl group or pentyl group; cycloalkyl groups such as a cyclopentyl group; alkenyl groups such as a vinyl group, allyl group or butenyl group; and groups in which a portion of, or all of, the hydrogen atoms bonded to carbon atoms in the above hydrocarbon groups have been substituted with halogen atoms or the like such as fluorine, bromine or chlorine atoms, such as a chloromethyl group, bromoethyl group or 3,3,3-trifluoropropyl group. Of these possibilities, from the viewpoints of ease of synthesis of the organosilicon compound of the present invention and economic viability, R⁵ is preferably a hydrogen atom.

In the above general formula (1), each R⁶ group represents an identical or different unsubstituted or substituted monovalent organic group that preferably contains from 1 to 6 carbon atoms, and more preferably from 1 to 4, and even more preferably from 1 to 3, carbon atoms. Specifically, each R⁶ group represents, independently, an unsubstituted or substituted monovalent hydrocarbon group, alkoxyalkyl group or acyl group that preferably contains from 1 to 6 carbon atoms, and more preferably from 1 to 4, and even more preferably from 1 to 3, carbon atoms. In those cases where R⁶ is a monovalent hydrocarbon group, specific examples of suitable groups include alkyl groups such as a methyl group, ethyl group, propyl group, isopropyl group, butyl group, t-butyl group, pentyl group or hexyl group; cycloalkyl groups such as a cyclopentyl group or cyclohexyl group; alkenyl groups such as a vinyl group, allyl group or butenyl group; a phenyl group; and groups in which a portion of, or all of, the hydrogen atoms bonded to carbon atoms in the above hydrocarbon groups have been substituted with halogen atoms or the like such as fluorine, bromine or chlorine atoms, such as a chloromethyl group, bromoethyl group, 3,3,3-trifluoropropyl group, 2-(nonafluorobutyl)ethyl group or p-chlorophenyl group. Furthermore, in those cases where R⁶ is an alkoxyalkyl group, specific examples of suitable groups include alkoxyalkyl groups such as a methoxyethyl group, methoxypropyl group, ethoxyethyl group or butoxyethyl group; and groups in which a portion of, or all of, the hydrogen atoms bonded to carbon atoms in the above alkoxyalkyl groups have been substituted with halogen atoms or the like such as fluorine, bromine or chlorine atoms. Moreover, in those cases where R⁶ is an acyl group, specific examples of suitable groups include acyl groups such as an acetyl group, propionyl group, acryloyl group or methacryloyl group; and groups in which a portion of, or all of, the hydrogen atoms bonded to carbon atoms in the above acyl groups have been substituted with halogen atoms or the like such as fluorine, bromine or chlorine atoms. Of these possibilities, from the viewpoints of ease of synthesis of the organosilicon compound of the present invention and economic viability, a methyl group or ethyl group is particularly preferred.

In the above general formula (1), m is typically an integer from 0 to 4, and is preferably from 0 to 3, and even more preferably from 0 to 2. From the viewpoints of ease of synthesis of the organosilicon compound of the present invention and economic viability, m is most preferably an integer from 0 to 1. Furthermore, in the above general formula (1), n is typically an integer from 2 to 20, although from the viewpoints of ease of synthesis of the organosilicon compound of the present invention and economic viability, n is preferably within a range from 2 to 10, and is more preferably 2.

Specific examples of the organosilicon compound represented by the general formula (1) include the compounds shown below, although the compound of the present invention is not restricted to the compounds shown below.

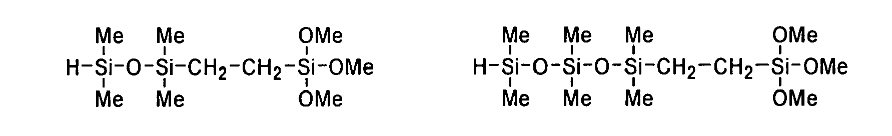

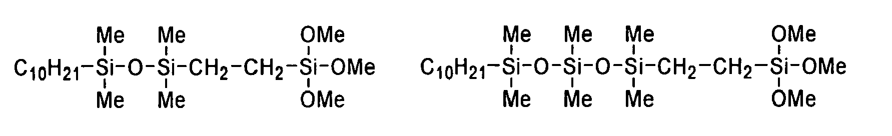

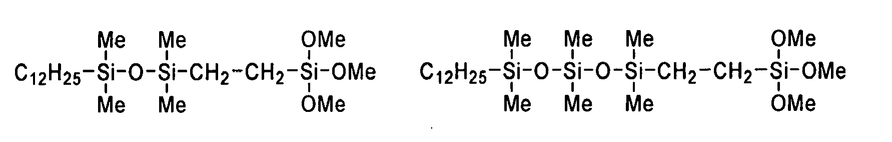

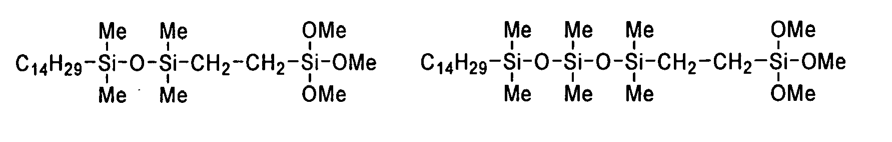

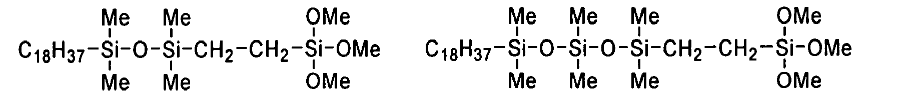

An organosilicon compound of the general formula (1) can be produced, for example, using the methods described below.

In a first method, the organosilicon compound is produced using a method that includes steps represented by the reaction formula (I) shown below.
Reaction Formula (I): 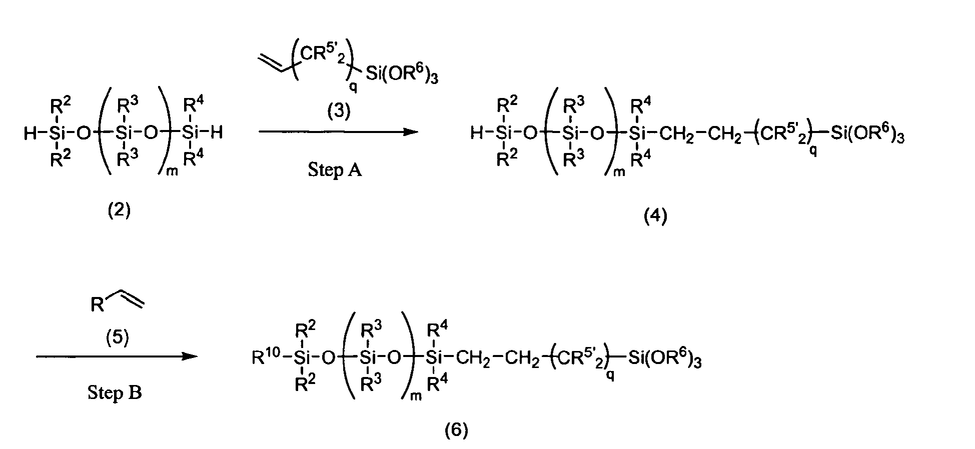 wherein, R² to R⁴, R⁶, and m are as defined above; each R^{5'} represents, independently, a hydrogen atom or an unsubstituted or substituted monovalent hydrocarbon group (such as an alkyl group, cycloalkyl group, alkenyl group, or group in which a portion of, or all of, the hydrogen atoms bonded to carbon atoms in these hydrocarbon groups have been substituted with halogen atoms or the like such as fluorine, bromine or chlorine atoms) that preferably contains from 1 to 5 carbon atoms, and more preferably from 1 to 3, and even more preferably from 1 to 2, carbon atoms, but is most preferably a hydrogen atom; R represents an unsubstituted or substituted monovalent hydrocarbon group that preferably contains from 4 to 28 carbon atoms, and more preferably from 6 to 18, and even more preferably from 8 to 16, carbon atoms; R¹⁰ represents an unsubstituted or substituted monovalent hydrocarbon group represented by R-CH₂-CH₂- that preferably contains from 6 to 30 carbon atoms, and more preferably from 8 to 20, and even more preferably from 10 to 18, carbon atoms; and q represents an integer from 0 to 18, but is preferably either 0 or 1, and is more preferably 0.

### <Step A>

By reacting an organohydrogensiloxane (2) with a vinylsilane (3) in the presence of a hydrosilylation catalyst, a one end organohydrogensilyl-terminated organopolysiloxane (4) is synthesized. This one end organohydrogensilyl-terminated organopolysiloxane (4) corresponds to the organosilicon compound of the present invention represented by the general formula (1) wherein R¹ is a hydrogen atom.

This reaction may be conducted without a solvent. Alternatively, the reaction may be conducted in the presence of a solvent such as toluene. The reaction temperature is typically within a range from 70 to 100°C, and is preferably from 70 to 90°C. The reaction time is typically from 1 to 3 hours. In this reaction, the quantity added of the vinylsilane (3) is preferably within a range from 0.5 to 1.0 mol, and more preferably from 0.5 to 0.6 mol, per 1 mol of the organohydrogensiloxane (2).

### <Step B>

By reacting the one end organohydrogensilyl-terminated organopolysiloxane (4) with an alkene (5) in the presence of a hydrosilylation catalyst, an organosilicon compound (6) is obtained. This organosilicon compound (6) corresponds to the organosilicon compound of the present invention represented by the general formula (1) wherein R¹ is a monovalent hydrocarbon group.

The reaction temperature is typically within a range from 70 to 100°C, and is preferably from 70 to 90°C. The reaction time is typically from 1 to 3 hours. In this reaction, the quantity added of the alkene (5) is preferably within a range from 1.0 to 2.0 mols, and more preferably from 1.0 to 1.5 mols, per 1 mol of the organopolysiloxane (4).

Specific examples of the group R include alkyl groups such as a butyl group, pentyl group, hexyl group, heptyl group, octyl group, nonyl group, decyl group, dodecyl group, tetradecyl group, hexadecyl group or octadecyl group; cycloalkyl groups such as a cyclohexyl group; alkenyl groups such as a butenyl group, pentenyl group, hexenyl group, heptenyl group, octenyl group, nonenyl group, decenyl group, dodecenyl group or tetradecenyl group; aryl groups such as a phenyl group, tolyl group, xylyl group or naphthyl group; aralkyl groups such as a benzyl group, 2-phenylethyl group or 2-methyl-2-phenylethyl group; and groups in which a portion of, or all of, the hydrogen atoms bonded to carbon atoms in the above hydrocarbon groups have been substituted with halogen atoms or the like such as fluorine, bromine or chlorine atoms, such as a 2-(nonafluorobutyl)ethyl group, 2-(heptadecafluorooctyl)ethyl group or p-chlorophenyl group.

In a second method, the organosilicon compound is produced using a method that includes steps represented by the reaction formula (II) shown below.
Reaction Formula (II): 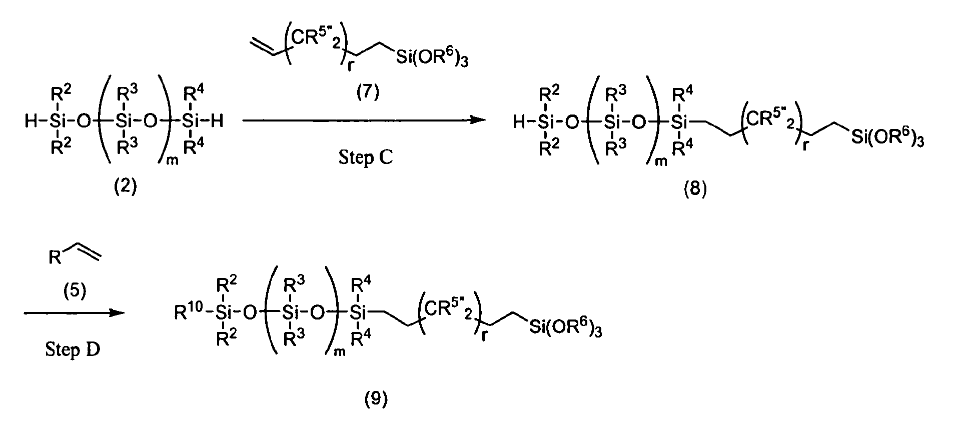 wherein, R² to R⁴, R⁶, R¹⁰, R and m are as defined above; each R^{5"} represents, independently, a hydrogen atom or an unsubstituted or substituted monovalent hydrocarbon group (such as an alkyl group, cycloalkyl group, alkenyl group, or group in which a portion of, or all of, the hydrogen atoms bonded to carbon atoms in these hydrocarbon groups have been substituted with halogen atoms or the like such as fluorine, bromine or chlorine atoms) that preferably contains from 1 to 5 carbon atoms, and more preferably from 1 to 3, and even more preferably from 1 to 2, carbon atoms, but is most preferably a hydrogen atom; and r represents an integer from 0 to 16, but is preferably 0.

### <Step C>

By reacting an organohydrogensiloxane (2) with an alkenyltriorganooxysilane (7) in the presence of a hydrosilylation catalyst, a one end organohydrogensilyl-terminated organopolysiloxane (8) is synthesized. This one end organohydrogensilyl-terminated organopolysiloxane (8) corresponds to the organosilicon compound of the present invention represented by the general formula (1) wherein R¹ is a hydrogen atom.

This reaction may be conducted without a solvent. Alternatively, the reaction may be conducted in the presence of a solvent such as toluene. The reaction temperature is typically within a range from 70 to 100°C, and is preferably from 70 to 90°C. The reaction time is typically from 1 to 3 hours. In this reaction, the quantity added of the alkenyltriorganooxysilane (7) is preferably within a range from 0.5 to 1.0 mol, and even more preferably from 0.5 to 0.6 mol, per 1 mol of the organohydrogensiloxane (2).

### <Step D>

By reacting the one end organohydrogensilyl-terminated organopolysiloxane (8) with an alkene (5) in the presence of a hydrosilylation catalyst, an organosilicon compound (9) is obtained. This organosilicon compound (9) corresponds to the organosilicon compound of the present invention represented by the general formula (1) wherein R¹ is a monovalent hydrocarbon group.

The reaction temperature is typically within a range from 70 to 100°C, and is preferably from 70 to 90°C. The reaction time is typically from 1 to 3 hours. In this reaction, the quantity added of the alkene (5) is preferably within a range from 1.0 to 2.0 mols, and even more preferably from 1.0 to 1.5 mols, per 1 mol of the organopolysiloxane (8).

Examples of methods of producing the raw material alkenyltriorganooxysilane (7) include methods that include a step represented by the reaction formula (III) shown below.
Reaction Formula (III): 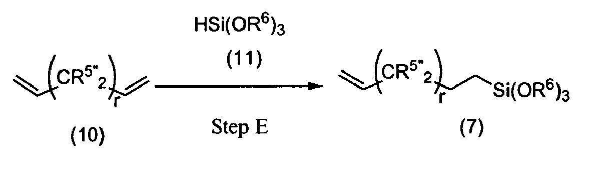 wherein, R⁵", R⁶ and r are as described above.

### <Step E>

By reacting a diene (10) with a triorganooxysilane (11) in the presence of a hydrosilylation catalyst, an alkenyltriorganooxysilane (7) is synthesized. This reaction may be conducted without a solvent. Alternatively, the reaction may be conducted in the presence of a solvent such as toluene. The reaction temperature is typically within a range from 70 to 100°C, and is preferably from 70 to 90°C. The reaction time is typically from 1 to 3 hours. In this reaction, the quantity added of the triorganooxysilane (11) is preferably within a range from 0.5 to 1.0 mol, and even more preferably from 0.5 to 0.6 mol, per 1 mol of the diene (10).

### <Hydrosilylation Catalyst>

The hydrosilylation catalyst used in each of the steps described above is a catalyst for accelerating the addition reaction between the aliphatic unsaturated group (alkenyl group or diene group or the like) within one of the raw material compounds, and the silicon atom-bonded hydrogen atom (namely, SiH group) within the other raw material compound. Examples of the hydrosilylation catalyst include platinum group metal-based catalysts such as simple platinum group metals, and compounds thereof. Conventional platinum group metal-based catalysts can be used, and specific examples include fine particles of platinum metal adsorbed to a carrier such as silica, alumina or silica gel, an alcohol solution of platinic chloride, chloroplatinic acid or chloroplatinic acid hexahydrate, as well as palladium catalysts and rhodium catalysts, although of these, compounds that contain platinum as the platinum group metal are preferred. The hydrosilylation catalyst may use either a single material, or a combination of two or more different materials.

The quantity added of the hydrosilylation catalyst need only be sufficient to enable effective acceleration of the aforementioned addition reactions, and a typical quantity, calculated as a mass of the platinum group metal relative to the combined mass of the raw material compounds, is within a range from 1 ppm (by mass, this also applies below) to 1% by mass, and a quantity from 10 to 500 ppm is preferred. Provided the quantity falls within this range, the addition reactions can be accelerated satisfactorily, and the rate of the addition reactions can be easily increased by increasing the quantity of the hydrosilylation catalyst, which is desirable from an economic viewpoint.

### EXAMPLES

As follows is a more detailed description of the present invention using a series of examples and comparative examples, although the present invention is in no way limited by the examples presented below.

### [Example 1]

A 1 liter round-bottom separable flask with a 4-necked separable cover was fitted with a stirrer, a thermometer, a Graham condenser and a dropping funnel. The separable flask was then charged with 537.3 g (4.0 mols) of 1,1,3,3-tetramethyldisiloxane, and the temperature was raised to 70°C. Once this temperature had been reached, 1.0 g of a 2% by mass 2-ethylhexanol solution of chloroplatinic acid was added, and the resulting mixture was stirred at 70°C for 30 minutes. Subsequently, 296.5 g (2.0 mols) of trimethoxyvinylsilane was added dropwise over a two hour period with the temperature held at 70 to 80°C, thereby initiating a reaction. Following completion of this dropwise addition, the reaction was continued with the temperature held at 70 to 80°C. During the reaction, the unreacted trimethoxyvinylsilane was refluxed. The progress of the reaction was tracked by gas chromatography, and the point where the chromatographic peak for trimethoxyvinylsilane disappeared was deemed to represent the completion of the reaction, and heating was stopped at this point. Following completion of the reaction, the interior of the separable flask was evacuated to a state of reduced pressure, and the residual 1,1,3,3-tetramethyldisiloxane was removed, yielding a product solution. This solution was distilled, yielding 339.1 g (1.2 mols, yield: 60%) of the target product, 1-trimethoxysilylethyl-1,1,3,3-tetramethyldisiloxane (12).

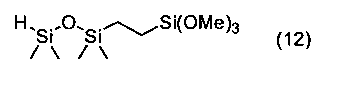

The above compound was identified by ²⁹Si-NMR and ¹H-NMR. ²⁹Si-NMR (C₆D₆): δ 10.19 to 9.59 ppm (CH₂SiMe₂O-), -6.88 to -7.50 ppm (HSiMe₂O-), -42.62 to -43.06 ppm (Si(OMe)₃);
¹H-NMR (CDCl₃): δ 4.66 to 4.59 ppm (m, 1H, HSi), 3.52 to 3.48 ppm (m, 9H, Si(OCH₃)₃), 1.04 to 0.48 ppm (m, 4H, Si(CH₂)₂Si), 0.12 to 0.01 ppm (m, 12H, Si(CH₃)₂O).

### [Example 2]

A 1 liter round-bottom separable flask with a 4-necked separable cover was fitted with a stirrer, a thermometer, a Graham condenser and a dropping funnel. The separable flask was then charged with 250.0 g (1.2 mols) of 1,1,3,3,5,5-hexamethyltrisiloxane, and the temperature was raised to 70°C. Once this temperature had been reached, 0.6 g of a 2% by mass 2-ethylhexanol solution of chloroplatinic acid was added, and the resulting mixture was stirred at 70°C for 30 minutes. Subsequently, 88.9 g (0.6 mol) of trimethoxyvinylsilane was added dropwise over a one hour period with the temperature held at 70 to 80°C, thereby initiating a reaction. Following completion of this dropwise addition, the reaction was continued with the temperature held at 70 to 80°C. During the reaction, the unreacted trimethoxyvinylsilane was refluxed. The progress of the reaction was tracked by gas chromatography, and the point where the chromatographic peak for trimethoxyvinylsilane disappeared was deemed to represent the completion of the reaction, and heating was stopped at this point. Following completion of the reaction, the interior of the separable flask was evacuated to a state of reduced pressure, and the residual 1,1,3,3,5,5-hexamethyltrisiloxane was removed, yielding a product solution. This solution was distilled, yielding 200.2 g (0.56 mol, yield: 56%) of the target product, 1-trimethoxysilylethyl-1,1,3,3,5,5-hexamethyltrisiloxane (13).

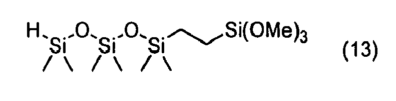

The above compound was identified by ²⁹Si-NMR and ¹H-NMR. ²⁹Si-NMR (C₆D₆): δ 8.33 to 7.82 ppm (CH₂SiMe₂O-), -7.23 to -7.51 ppm (HSiMe₂O-), - 19.73 to -20.24 ppm (-OSiMe₂O-), -42.56 to -42.97 ppm (Si(OMe)₃);
¹H-NMR (CDCl₃): δ 4.70 to 4.66 ppm (m, 1H, HSi), 3.56 ppm (s, 9H, Si(OCH₃)₃), 1.09 to 0.56 ppm (m, 4H, Si(CH₂)₂Si), 0.17 to 0.02 ppm (m, 18H, Si(CH₃)₂O).

### [Example 3]

A 1 liter round-bottom separable flask with a 4-necked separable cover was fitted with a stirrer, a thermometer, a Graham condenser and a dropping funnel. The separable flask was then charged with 168.3 g (1.2 mols) of 1-decene, and the temperature was raised to 70°C. Once this temperature had been reached, 0.6 g of a 2% by mass 2-ethylhexanol solution of chloroplatinic acid was added, and the resulting mixture was stirred at 70°C for 30 minutes. Subsequently, 282.6 g (1.0 mol) of the 1-trimethoxysilylethyl-1,1,3,3-tetramethyldisiloxane obtained in Example 1 was added dropwise over a two hour period, thereby initiating a reaction. Following completion of this dropwise addition, the reaction was continued with the temperature held at 70 to 80°C. During the reaction, the unreacted 1-trimethoxysilylethyl-1,1,3,3-tetramethyldisiloxane was refluxed. The progress of the reaction was tracked by gas chromatography, and the point where the chromatographic peak for 1-trimethoxysilylethyl-1,1,3,3-tetramethyldisiloxane disappeared was deemed to represent the completion of the reaction, and heating was stopped at this point. Following completion of the reaction, the interior of the separable flask was evacuated to a state of reduced pressure, and the residual 1-decene was removed, yielding an oily product. This oily product was purified with activated carbon, yielding 380.5 g (0.9 mol, yield: 90%) of the target product, 1-decanyl-3-trimethoxysilylethyl-1,1,3,3-tetramethyldisiloxane (14).

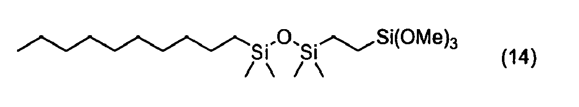

The above compound was identified by ²⁹Si-NMR and ¹H-NMR. ²⁹Si-NMR (C₆D₆): δ 7.86 to 6.83 ppm (CH₂SiMe₂OSiMe₂CH₂), -42.50 to -42.82 ppm (Si(OMe)₃);
¹H-NMR (CDCl₃): δ 3.55 ppm (s, 9H, Si(OCH₃)₃), 1.24 to 0.48 ppm (m, 25H, Si(CH₂)₂Si, CH₂, CH₃), 0.08 to 0.01 ppm (m, 12H, Si(CH₃)₂O).

### [Example 4]

A 1 liter round-bottom separable flask with a 4-necked separable cover was fitted with a stirrer, a thermometer, a Graham condenser and a dropping funnel. The separable flask was then charged with 235.6 g (1.2 mols) of 1-tetradecene, and the temperature was raised to 70°C. Once this temperature had been reached, 0.6 g of a 2% by mass 2-ethylhexanol solution of chloroplatinic acid was added, and the resulting mixture was stirred at 70°C for 30 minutes. Subsequently, 356.71 g (1.0 mol) of the 1-trimethoxysilylethyl-1,1,3,3,5,5-hexamethyltrisiloxane obtained in Example 2 was added dropwise over a two hour period, thereby initiating a reaction. Following completion of this dropwise addition, the reaction was continued with the temperature held at 70 to 80°C. During the reaction, the unreacted 1-trimethoxysilylethyl-1,1,3,3,5,5-hexamethyltrisiloxane was refluxed. The progress of the reaction was tracked by gas chromatography, and the point where the chromatographic peak for 1-trimethoxysilylethyl-1,1,3,3,5,5-hexamethyltrisiloxane disappeared was deemed to represent the completion of the reaction, and heating was stopped at this point. Following completion of the reaction, the interior of the separable flask was evacuated to a state of reduced pressure, and the residual 1-tetradecene was removed, yielding an oily product. This oily product was purified with activated carbon, yielding 492.2 g (0.9 mol, yield: 89%) of the target product, 1-tetradecanyl-3-trimethoxysilylethyl-1,1,3,3,5,5-hexamethyltrisiloxane (15).

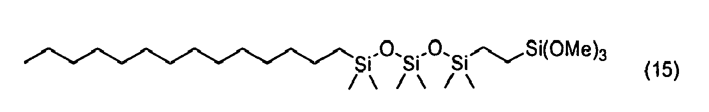

The above compound was identified by ²⁹Si-NMR and ¹H-NMR. ^{z9}Si-NMR (C₆D₆): δ 7.95 to 6.93 ppm (CH₂SiMe₂, OSiMe₂CH₂), -21.39 to -21.89 ppm (-OSiMe₂O-), -42.53 to -42.90 ppm (Si(OMe)₃);
¹H-NMR (CDCl₃): δ 3.56 ppm (s, 9H, Si(OCH₃)₃), 1.24 to 0.48 ppm (m, 33H, Si(CH₂)₂Si, CH₂, CH₃), 0.13 to 0.00 ppm (m, 18H, Si(CH₃)₂O).

### [Application Examples]

First, each of the following components required to form compositions of the present invention were prepared.
(A) Organopolysiloxane
   A-1: an organopolysiloxane with a kinematic viscosity of 500 mm²/s, represented by the formula shown below. 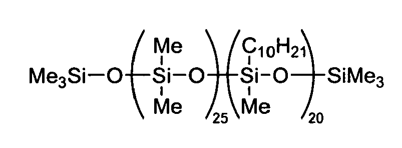
(B) Wetter
   B-1: an organopolysiloxane represented by the formula shown below. Me₃SiO(SiMe₂O)₃₀Si(OMe)₃
   B-2: an alkoxysilane represented by the formula shown below. C₁₀H₂₁Si(OCH₃)₃
   B-3: an organosilicon compound (synthesized in Example 4), represented by the formula shown below. 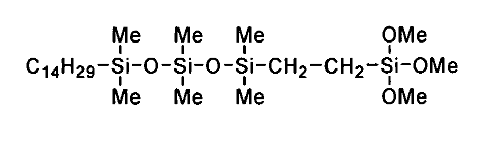
(C) Thermal conductive Filler
   C-1: aluminum powder (average particle size: 10.0 µm, the fraction that passed through a mesh size of 32 µm prescribed in JIS Z 8801-1)
   C-2: Aluminum powder (average particle size: 1.5 µm, the fraction that passed through a mesh size of 32 µm prescribed in JIS Z 8801-1)
   C-3: Zinc oxide powder (average particle size: 1.0 µm, the fraction that passed through a mesh size of 32 µm prescribed in JIS Z 8801-1)

The average particle size values for the various components (C) represent volume-based cumulative average particle size values measured using a particle size analyzer Microtrac MT3300EX, manufactured by Nikkiso Co., Ltd., Japan.

### [Method of Production]

The components (A) through (C) were mixed together in the ratios shown below, thereby forming compositions of Examples 5 and 6, and Comparative Examples 1 and 2. In other words, the components (A) through (C) were combined in a 5 liter planetary mixer (manufactured by Inoue Manufacturing Co., Ltd., Japan) using the ratios (parts by volume) shown in Table 1 and Table 2, and in each case the resulting mixture was mixed for one hour at 70°C. The mixture was then cooled to room temperature.

### [Test Methods]

The properties of the prepared compositions were measured using the test methods described below. The results are shown in Table 1 and Table 2.

### [Measurement of Viscosity]

Each of the prepared compositions was allowed to stand for 24 hours in a constant-temperature chamber at 25°C, and the viscosity (the initial viscosity) was then measured at a rotational velocity of 10 rpm using a viscometer (product name: Spiral Viscometer PC-1TL, manufactured by Malcom Co., Ltd., Japan).

Following measurement of the initial viscosity, the composition was left to stand at 125°C for 500 hours, and the viscosity of the composition was then re-measured using the same viscometer.

### [Measurement of Thermal Conductivity]

Each of the prepared compositions was poured into a mold with a thickness of 3 cm, a kitchen wrap was used to cover the composition, and the thermal conductivity of the composition was then measured using a thermal conductivity meter (product name: QTM-500) manufactured by Kyoto Electronics Manufacturing Co., Ltd., Japan.

### [Measurement of Thermal Resistance]

### <Test Piece Preparation>

A layer of the composition with a thickness of 75 µm was sandwiched between two circular aluminum plates of diameter 12.6 mm and thickness 1 mm, and preparation of the test piece was then completed by applying a pressure of 0.15 MPa at 25°C for a period of 60 minutes.

### <Measurement of Thickness>

The thickness of each test piece was measured using a micrometer (manufactured by Mitsuyo Co., Ltd., Japan), and the thickness of the composition layer was then calculated by subtracting the known thickness of the two aluminum plates.

### <Measurement of Thermal Resistance>

Using each of the test pieces described above, the thermal resistance of the composition (units: mm²·K/W) was measured at 25°C, using a thermal resistance measurement device that employed a laser flash method (LFA447 NanoFlash, a xenon flash analyzer manufactured by Netzch Incorporated, USA).

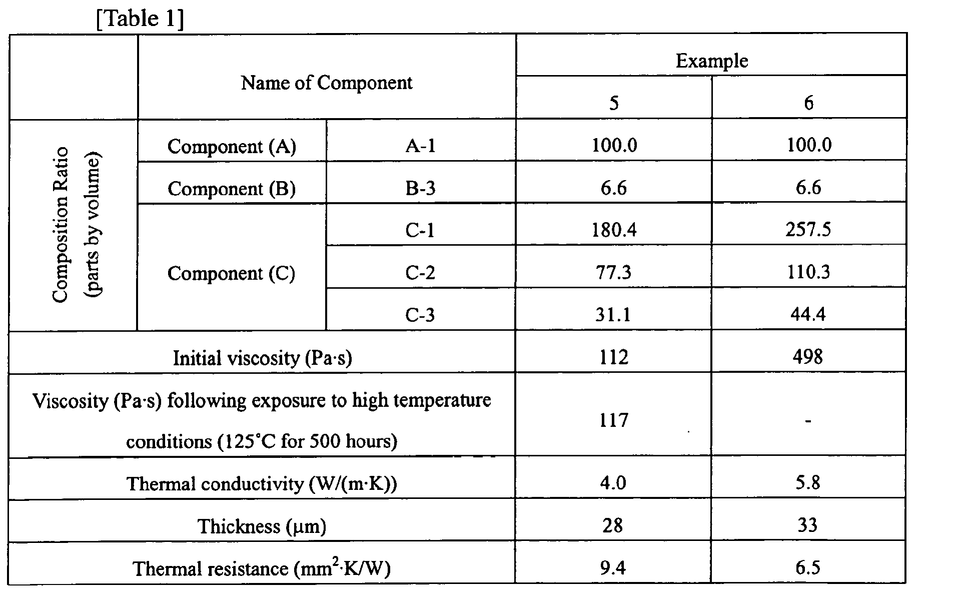

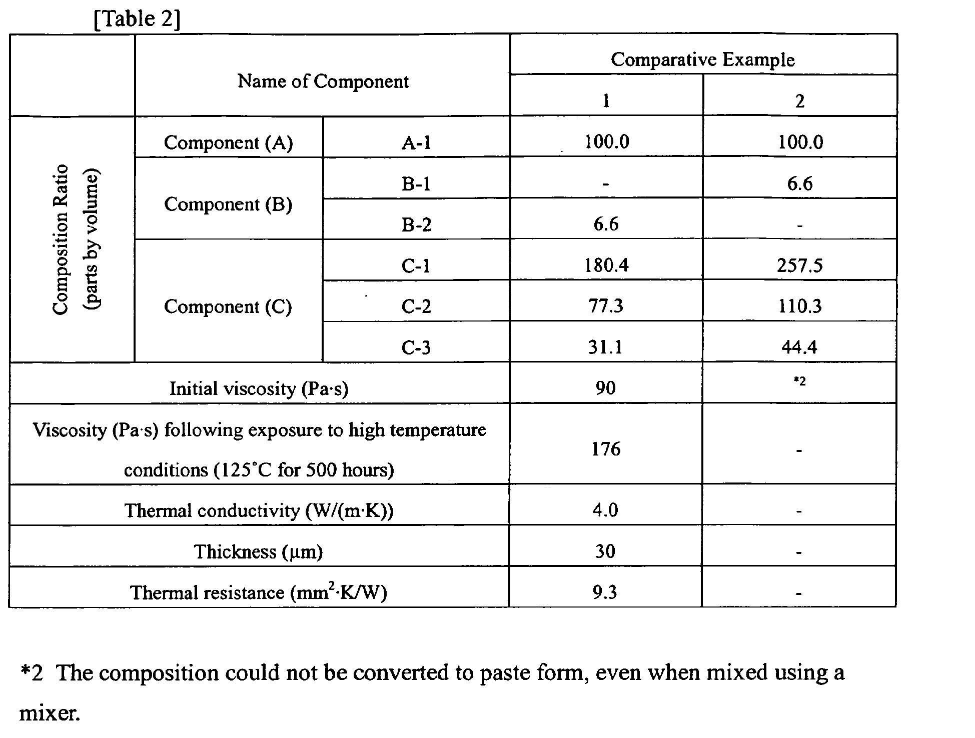

From the results in Table 1 and Table 2 it is evident that although the composition of Example 5 is merely the composition in which the B component in Comparative Example 1 has been changed from B-2 to the organosilicon compound B-3 of the present invention, the variation in the viscosity of the composition of Example 5 upon exposure to high temperature conditions is much smaller than the variation in viscosity observed for Comparative Example 1. Furthermore, it is also evident that the composition of Example 6 is merely the composition in which the B component in Comparative Example 2 has been changed from B-1 to the organosilicon compound B-3 of the present invention, and although the composition of Comparative Example 2 could not be converted to paste form and lacked fluidity, the composition of Example 6 exhibited suitable fluidity.

## Claims

1. An organosilicon compound represented by a general formula (1) 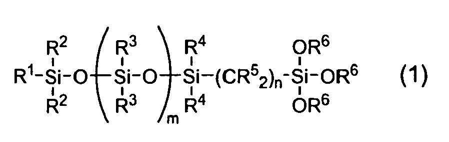 wherein, R¹ represents a hydrogen atom, or an unsubstituted or substituted monovalent hydrocarbon group, R² to R⁴ represent identical or different unsubstituted or substituted monovalent hydrocarbon groups, each R⁵ represents, independently, a hydrogen atom, or an unsubstituted or substituted monovalent hydrocarbon group, each R⁶ represents, independently, an identical or different unsubstituted or substituted monovalent organic group, m represents an integer from 0 to 4, and n represents an integer from 2 to 20.

2. The organosilicon compound according to claim 1, wherein each R⁶ represents, independently, an unsubstituted or substituted monovalent hydrocarbon group, alkoxyalkyl group, or acyl group.

3. The organosilicon compound according to claim 1, wherein
in cases where R¹ is an unsubstituted or substituted monovalent hydrocarbon group, a number of carbon atoms within R¹ is within a range from 6 to 30,
a number of carbon atoms within each of R² to R⁴ is within a range from 1 to 8,
in cases where R⁵ is an unsubstituted or substituted monovalent hydrocarbon group, a number of carbon atoms within R⁵ is within a range from 1 to 5, and
a number of carbon atoms within R⁶ is within a range from 1 to 6.

4. The organosilicon compound according to claim 2, wherein
in cases where R¹ is an unsubstituted or substituted monovalent hydrocarbon group, a number of carbon atoms within R¹ is within a range from 6 to 30,
a number of carbon atoms within each of R² to R⁴ is within a range from 1 to 8,
in cases where R⁵ is an unsubstituted or substituted monovalent hydrocarbon group, a number of carbon atoms within R⁵ is within a range from 1 to 5, and
a number of carbon atoms within R⁶ is within a range from 1 to 6.

5. The organosilicon compound according to claim 1, wherein m is either 0 or 1, andnis2.

6. The organosilicon compound according to claim 2, wherein m is either 0 or 1, and n is 2.

7. A method of producing an organosilicon compound (6), wherein a one end organohydrogensilyl-terminated organopolysiloxane (4) is produced by reacting an organohydrogensiloxane (2) with a vinylsilane (3) in the presence of a hydrosilylation catalyst in accordance with a step A shown below, and optionally said one end organohydrogensilyl-terminated organopolysiloxane (4) is reacted with an alkene (5) in the presence of a hydrosilylation catalyst in accordance with a step B shown below: 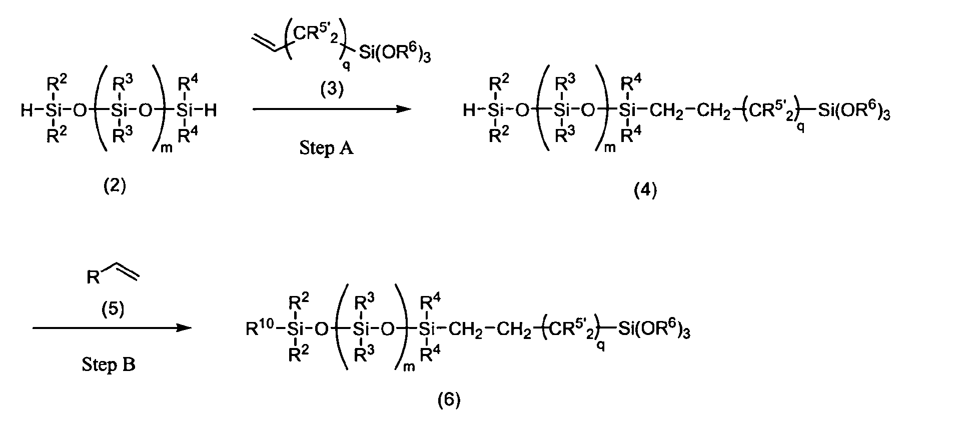 wherein, R² to R⁴, R⁶, and m are as defined in claim 1, each R^{5'} represents, independently, a hydrogen atom or an unsubstituted or substituted monovalent hydrocarbon group, R represents an unsubstituted or substituted monovalent hydrocarbon group, R¹⁰ represents an unsubstituted or substituted monovalent hydrocarbon group represented by R-CH₂-CH₂-, and q represents an integer from 0 to 18.

8. A method of producing an organosilicon compound (9), wherein a one end organohydrogensilyl-terminated organopolysiloxane (8) is produced by reacting an organohydrogensiloxane (2) with an alkenyltriorganooxysilane (7) in the presence of a hydrosilylation catalyst in accordance with a step C shown below, and optionally said one end organohydrogensilyl-terminated organopolysiloxane (8) is reacted with an alkene (5) in the presence of a hydrosilylation catalyst in accordance with a step D shown below: 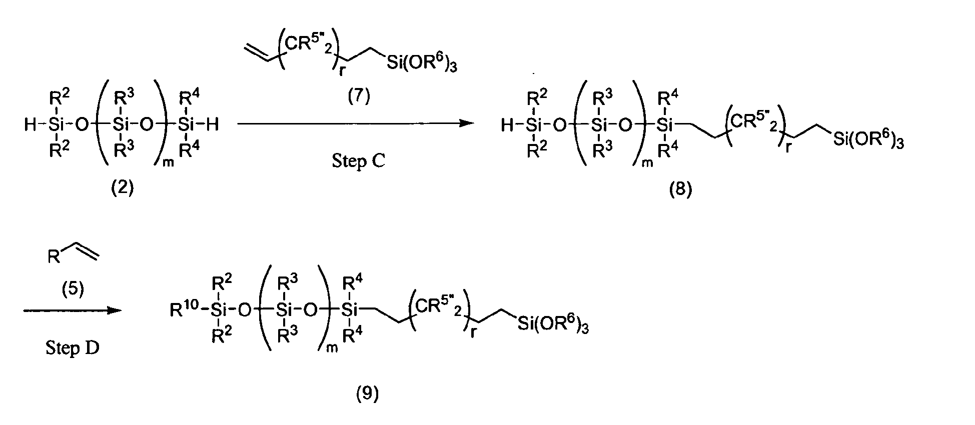 wherein, R² to R⁴, R⁶, and m are as defined in claim 1, each R^{5"} represents, independently, a hydrogen atom or an unsubstituted or substituted monovalent hydrocarbon group, R represents an unsubstituted or substituted monovalent hydrocarbon group, R¹⁰ represents an unsubstituted or substituted monovalent hydrocarbon group represented by R-CH₂-CH₂-, and r represents an integer from 0 to 16.
